# EUROPÄISCHE PATENTSCHRIFT

(11) **EP 0 806 643 B1**
(45) Veröffentlichungstag und Bekanntmachung des Hinweises auf die Patenterteilung: **12.11.2003**
(21) Anmeldenummer: 97810192.1
(22) Anmeldetag: 03.04.1997
(51) Int. Cl.: G01L 5/16

(54) **Kraft- und/oder Momentmessanordnung**
Device for measuring the force and/or torque
Dispositif de mesure de la force et/ou du moment

(30) Priorität: 09.05.1996 CH 119296
(43) Veröffentlichungstag der Anmeldung: 12.11.1997
(73) Patentinhaber: Kistler Holding AG, 8408 Winterthur (CH)
(72) Erfinder: Sidler, Andreas, 9545 Wängi (CH); Wolfer, Peter, 8451 Kleinandelfingen (CH); Stirnimann, Josef, 8400 Winterthur (CH); Kohler, Denis, 8413 Neftenbach (CH)

(56) Entgegenhaltungen:
- EP-A- 0 594 534
- WO-A-85/03479
- DE-A- 1 952 522
- DE-A- 4 336 773
- US-A- 5 165 205
- PATENT ABSTRACTS OF JAPAN vol. 013, no. 050 (P-823), 6.Februar 1989 & JP 63 243828 A (NGK SPARK PLUG CO LTD), 11.Oktober 1988,
- PATENT ABSTRACTS OF JAPAN vol. 010, no. 294 (P-504), 7.Oktober 1986 & JP 61 111435 A (FUJITSU LTD), 29.Mai 1986,

## Beschreibung

Die Erfindung betrifft eine Kraft- und/oder Momentmessanordnung mit mehreren mit piezoelektrischen Sensoren ausgerüsteten Mehrkomponenten-Kraftmesszellen in Verbindung mit Plattformen für die Kraft- und/oder Momenteinleitung und mit Verstärkern und Auswerteeinheiten, wobei die Kraftmesszellen jeweils aus schub- und zug/druckempfindlichen Sensorscheiben bestehen.

Aus der DE-C-1952522 ist eine Messanordnung für die Messung von Kräften und Drehmomenten bekannt, bei der zwischen einer Grundund einer Deckplatte mehrere Mehrkomponenten-Kraftmesszellen unter Vorspannung angeordnet sind. Die Vorspannung für die Messzellen, die sowohl schub- als auch zug/druckempfindliche Sensorscheiben enthalten, wird dabei jeweils durch eine die Messzelle durchsetzende Vorspannschraube erzeugt, die von der Deckplatte her in die Grundplatte eingeschraubt wird. Die Orientierung der aus Einkristallen, beispielsweise aus Quarz, oder aus polykristalliner Piezokeramik bestehenden Sensoren in den Mehrkomponenten-Messzellen ist dabei so, dass die Zug/Druckempfindlichkeit der Sensoren senkrecht zur Oberfläche der Deckplatte (z-Richtung) gerichtet ist, die als Montageplatte für zu bearbeitende Werkstücke dient.

Es hat sich nun gezeigt, dass bei Temperaturschwankungen in der Messanordnung, beispielsweise durch eine infolge der Werkstückbearbeitung auftretende Erwärmung, die Kraftmessungen für die Druckkraftkomponente verfälscht werden, weil dadurch eine unterschiedliche Längenänderung von Deckplatte und Vorspannschrauben und somit eine Änderung der Vorspannung bewirkt wird.

Besonders bei Fein- und Feinstbearbeitungen von Werkstücken sind diese von Temperaturänderungen hervorgerufenen Fehler der Messwerte für die Druckkraftkomponente nicht tolerierbar. Es ist daher die Aufgabe der Erfindung, eine Kraftmessanordnung zu schaffen, bei der die von Temperaturänderungen hervorgerufenen Messfehler möglichst weitgehend kompensiert werden. Selbstverständlich ist jedoch die Anwendung der neuen, temperaturkompensierten Messanordnung nicht auf die Kraft- und Momentmessung bei der Bearbeitung von Werkstücken beschränkt.

Die genannte Aufgabe wird erfindungsgemäss dadurch gelöst, dass die Kraftmesszellen, in Richtung der Zug/Druckempfindlichkeit der Sensoren gesehen, an beiden Endflächen der Plattform angeordnet sind, dass ferner paarweise einander zugeordnete, Zug/druckempfindliche Sensorscheiben von einer gemeinsamen, in der Plattform frei dehnbaren Vorspannschraube durchsetzt und vorgespannt sind, und dass schliesslich die einander zugeordneten, Zug/druckempfindlichen Sensorscheiben an den Enden der Plattform entgegengesetzt und mindestens annähernd gleich stark polarisiert sind.

Eine Temperaturänderung, die über die zwischen den Sensoren gelegene Krafteinleitplatte eine Längenänderung verursacht und über diese Längenänderung auf die einander zugeordneten Sensoren einwirkt, erzeugt infolge der entgegengesetzten Orientierung der Sensorscheiben in diesen Ladungen entgegengesetzten Vorzeichens, die sich daher in dem Messsignal gegenseitig "neutralisieren". Für eine in einer Richtung wirkende Kraftkomponente addieren sich die Ladungen beider Sensoren dagegen zu dem geforderten Kraftmesssignal.

In analoger Weise werden durch Temperaturänderungen bewirkte Messsignale gebildet, wenn die Messeinrichtung einseitig erwärmt wird. Die Wärme wird in die durchgehende Vorspannschraube geleitet und verursacht so wiederum eine "Neutralisierung" der temperaturabhängigen Messsignale in den Mehrkomponentenkraftmesszellen.

Für die Bearbeitung von Werkstücken hat es sich als vorteilhaft erwiesen, wenn die Plattform eine steife Montageplatte für die zu bearbeitenden Werkstücke ist, bei der die Kraftmesszellen senkrecht zur Montagefläche für die Werkstücke angeordnet sind.

Für Dynamometer geringster Bauhöhe kann die Plattform zwischen den Messstellen und zwei äusseren Montageblöcken angeordnet sein, die ihrerseits der Montage der Messanordnung dienen, wobei diese Montage mit Hilfe von nahe den Sensoren angeordneten Aufspannschrauben erfolgt. Dies ergibt für die Messanordnung eine hohe Steifigkeit und damit eine hohe Eigenfrequenz. Durch die Anordnung der gemeinsamen Vorspannschraube in der bezüglich Verbiegung neutralen Achse der Plattform lassen sich zusätzlich Fehlsignale aufgrund von Verbiegungen der Plattform klein halten oder vermeiden.

Für andere Anwendungen der neuen Messanordnung, beispielsweise in Radnaben von Fahrzeugen, hat sich eine Konstruktion bewährt, bei der die Plattform für die Krafteinleitung als Scheibenplatte ausgebildet ist, die ihrerseits unter Zwischenschaltung der zwei, jeweils einander zugeordneten Mehrkomponenten-Kraftmesszellen zwischen zwei ebenfalls als Scheiben ausgebildeten Kraftableitplatten angeordnet ist.

Die Signalwegführung von mehreren Messzellen wird vereinfacht, wenn die Signalleitungen für die Mess-Signale der einzelnen Messzellen in einem Sammelkanal zusammengeführt und über einen Sammelstecker nach aussen geleitet sind, von wo sie als Kabelverbindung zu den Verstärkern und den Auswerteeinheiten geführt sind. Es ist jedoch auch möglich, die Verstärker und die Auswerteeinheiten direkt in der Krafteinleitplattform oder in einem der Montageblöcke, bzw. in einer der Kraftableitplatte unterzubringen, so dass die Weiterleitung von bereits verstärkten und aufbereiteten Signalen möglich.ist. Diese Massnahme verbessert die Betriebssicherheit beim Einsatz der neuen Messanordnung.

Es zeigen
- Fig. 1: eine Kraftmessanordnung nach dem Stand der Technik,
- Fig. 2: eine Mehrkomponenten-Kraftmesszelle nach dem Stand der Technik, wie sie in Fig. 1 verwendet ist,
- Fig. 3: schematisch eine erfindungsgemässe Kraftmessanordnung bei einer reinen Wärmebelastung,
- Fig. 4: schematisch eine Kraftmessanordnung nach der Erfindung bei einer Belastung durch eine äussere Kraft,
- Fig. 5: schematisch eine erfindungsgemässe Kraftmessanordnung als Dynamometer geringster Höhe,
- Fig. 6: die Anordnung nach Fig. 5 im Einsatz bei einer Werkstückbearbeitung unter Temperatur- und Krafteinfluss und
- Fig. 7: eine weitere Ausführungsform der Erfindung mit rotierenden Scheibenplatten an der Radnabe eines Fahrzeuges.

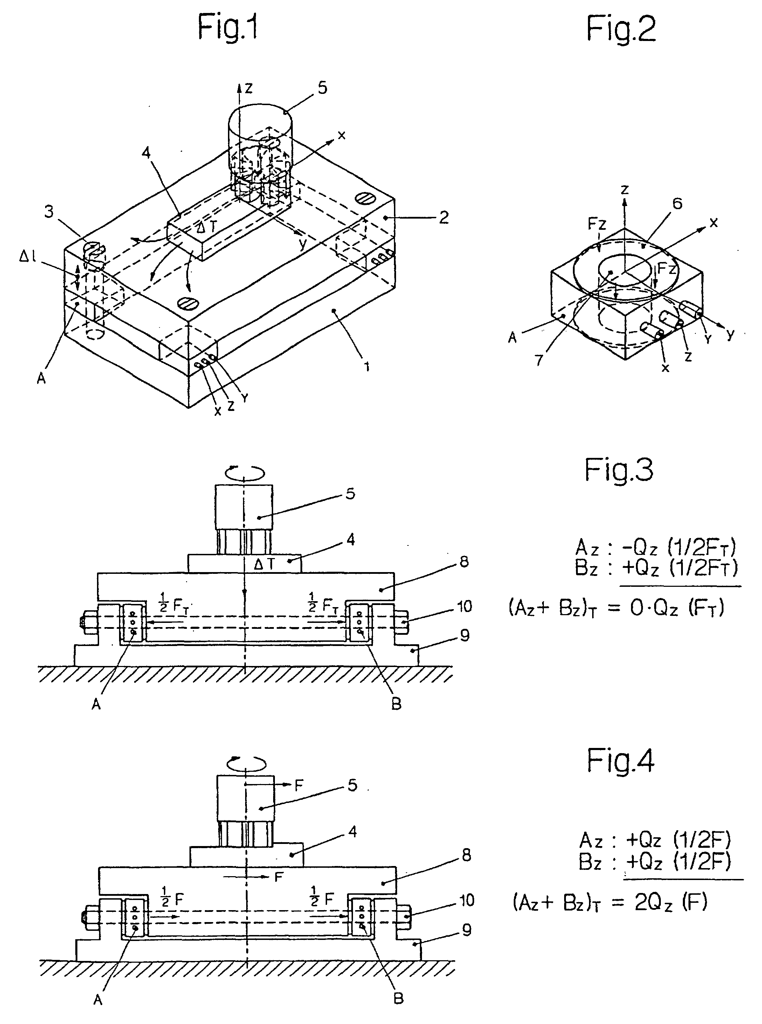

Bei der den Stand der Technik repräsentierenden Anordnung nach Fig. 1 sind zwischen einer Grundplatte 1 und einer Deckplatte 2 vier Mehrkomponenten-Kraftmesszellen A unter Vorspannung angeordnet. Die Vorspannung wird erzeugt durch Vorspannschrauben 3, die die Deckplatte 2 und die Messzellen A durchsetzen und in die Grundplatte 1 eingeschraubt sind. Auf der Deckplatte 2 ist ein Werkstück 4 montiert, das von einem nur angedeuteten Werkzeug 5 bearbeitet wird.

Eine einzelne Kraftmesszelle A, wie sie in Fig. 2 gezeigt ist, enthält mehrere piezoelektrische Sensorscheiben 6, von denen mindestens eine in z-Richtung eines rechtwinkligen Koordinatensystems zug/druckempfindlich und mindestens je eine in x- und y-Richtung schubempfindlich ist. Für den erwähnten Durchtritt der Vorspannschraube 3 enthält die Messzelle A eine Bohrung 7. Mit x, y, z sind die Signalleitungsanschlüsse an der Messzelle A für die Signalkomponenten in x-, y- und z-Richtung bezeichnet. Da die die Zug/Druckempfindlichkeit der Messzelle A wiedergebende z-Richtung der Zelle mit der Richtung der auf die Messanordnung ausgeübten Druckkraft übereinstimmt, sind die beiden Koordinatensysteme für die Messanordnung und für die Messzelle gleich orientiert, wie ein Vergleich der Fig. 1 und 2 zeigt.

Durch die Bearbeitung des Werkstückes 4 ist die Messanordnung einerseits mit einer Temperaturerhöhung ΔT (Fig. 1) und andererseits mit einer Kraft F belastet, von der in Fig. 2 nur die Komponente Fz in z-Richtung dargestellt ist. Infolge der Temperaturerhöhung ΔT erfährt die Vorspannschraube 3 eine Dehnung Δℓ (Fig. 1), durch die für die Messung der Kraft Fz in z-Richtung ein Messfehler erzeugt wird.

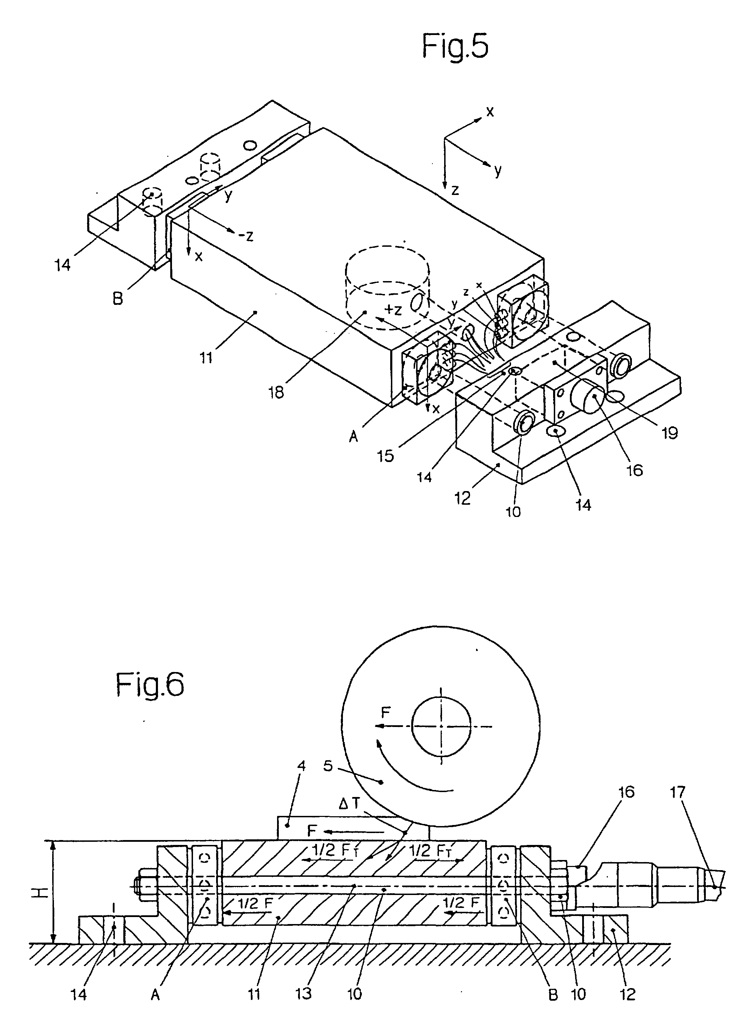

Bei der erfindungsgemässen Anordnung (Fig. 3 und 4) ist die Deckplatte 2 durch eine T-förmige Montageplattform 8 ersetzt, die in einem U-förmigen Ständer 9 gelagert ist. Die Kraftmesszellen A und B sind nicht mehr horizontal angeordnet, sondern zwischen den vertikalen U-Schenkeln des Ständers 9 und dem Stamm der T-Plattform 8 vertikal eingespannt. Erfindungsgemäss erfolgt die Vorspannung der Messzellen A und B mittels einer einzigen den Stamm der Plattform 8 durchsetzenden Vorspannschraube 10, die sich reibungsfrei durch die Plattform 8 erstreckt. Weiterhin sind die Sensorscheiben 6 der Messzellen A und B so angeordnet und orientiert, dass zum einen die z-Richtung der Sensorscheiben 6, die durch die Richtung von deren Zug/Druckempfindlichkeit festgelegt ist, in Richtung der Vorspannschraube 10 verläuft und zum anderen die Zug-/Druckempfindlichkeit für die Messzelle A zu derjenigen der Messzelle B entgegengesetzt gerichtet ist. Wie in Fig. 5 gezeigt, ist das Koordinatensystem der Messzellen folglich gegenüber demjenigen der Messanordnung um 90° gedreht.

Eine Temperaturerhöhung im zwischen den Messzellen A und B gelegenen Stamm der Plattform 8 und damit auch in der Vorspannschraube 10 erzeugt eine Kraft F_{T}, die sich je zur Hälfte auf die Zellen A und B verteilt. Bezogen auf das Koordinatensystem für die Messzellen wird dadurch bei einer gegebenen Orientierung der zug/druckempfindlichen Sensorscheiben in der Messzelle A beispielsweise eine Ladung -Q_{Z} als Funktion der Kraft 1/2 F_{T} erzeugt, während in der Messzelle B infolge der entgegengesetzten Orientierung der zug/druckempfindlichen Sensorscheibe die Ladung +Q_{Z}, ebenfalls als Funktion von 1/2 F_{T}, auftritt. Bei der Zusammenführung beider temperaturabhängigen Signalladungen ergibt sich also als Wirkung der Temperaturkraft F_{T} die Gesamtladung Q_{Z} (F_{T}) = o (Fig. 3), womit eine Kompensation des Temperatureinflusses erreicht ist.

Bei einer einseitig wirkenden, von dem Werkzeug 5 verursachten Kraft F (Fig. 4) hingegen addieren sich die Ladungen +Q_{Z} in z-Richtung (auf die Messzellen bezogenes Koordinatensystem), je als Funktion der Kraft 1/2 F, für die Komponente A_{Z} der Messzelle A und für die Komponente B_{Z} der Messzelle B zu einer Gesamtladung 2 Q_{Z} als Funktion der Kraft F. Beide Wirkungen der Erfindung sind in Fig. 3, bzw. Fig. 4 verdeutlicht und formelmässig erfasst.

Fig. 5 und 6 geben in räumlicher Darstellung, bzw. im Schnitt den Aufbau eines Dynamometers für die Bearbeitung von Werkstücken wieder. Dieses Dynamometer zeichnet sich durch eine extrem niedrige Bauhöhe H (Fig. 6) aus. Bei ihm dient eine in sich sehr steife Montageplatte 11 einerseits für die Aufnahme des von dem rotierenden, zerspanenden Werkzeug 5 (Fig. 6) bearbeiteten Werkstückes 4 <Fig. 6) und andererseits gleichzeitig als Krafteinleitplatte für die Messzellen A und B. Diese sind jeweils in vertikaler Lage zwischen den Stirnseiten der Platte 11 und Montageblöcken 12 eingespannt, wobei die Vorspannung wiederum durch die durchgehende Vorspannschraube 10 aufgebracht wird. Um Fehler durch eine Verformung der Montageplatte 11 und der Vorspannschrauben 10 möglichst gering zu halten, sind die Vorspannschrauben 10 in der bezüglich Verbiegen neutralen Achse 13 (Fig. 6) der Platte 11 angeordnet.

Die Montageblöcke 12 haben eine Anzahl Bohrungen 14 für den Durchtritt von nicht gezeigten Aufspannschrauben, mit denen die Messanordnung selbst beispielsweise in einer Werkzeugmaschine montiert werden kann. Die Bohrungen 14 sind möglichst nahe den Messzellen A und B gelegen. Dadurch wird die Steifigkeit der montierten Messanordnung möglichst gross, was eine hohe Eigenfrequenz des Systems zur Folge hat.

In Fig. 5 sind, wie in Fig. 1 und 2 die beiden verschiedenen Koordinatensysteme gezeigt, und zwar das auf die ganze Messanordnung bezogene links oberhalb der Montageplatte 11 und das messzellenbezogene in der linken vorderen, bzw. hinteren Messzelle A, bzw. B. Infolge der entgegengesetzten Orientierung der zug/druckempfindlichen Sensoren in den Messzellen A und B sind die z-Achsen des messzellenbezogenen Koordinatensystems mit entgegengesetzten Vorzeichen gegeneinander gerichtet.

Die Signalleitungen 15 (Fig. 5) der einzelnen Messzellen sind zu einem Sammelstecker 16 geführt, von dem aus sie als Kabel 17 zu nicht gezeigten Verstärkern und Auswerteeinheiten gelangen. Es ist jedoch auch möglich, Verstärker und Auswerteeinheiten in der Montageplatte 11 und/oder in einem der Montageblöcke 12 in Hohlräumen 18 und 19 unterzubringen, die in Fig. 5 gestrichelt angedeutet sind. Aus diesen Hohlräumen 18 und 19 werden dann die bereits verstärkten und aufbereiteten Signale weitergeleitet, wodurch die Betriebssicherheit der Anordnung erhöht wird.

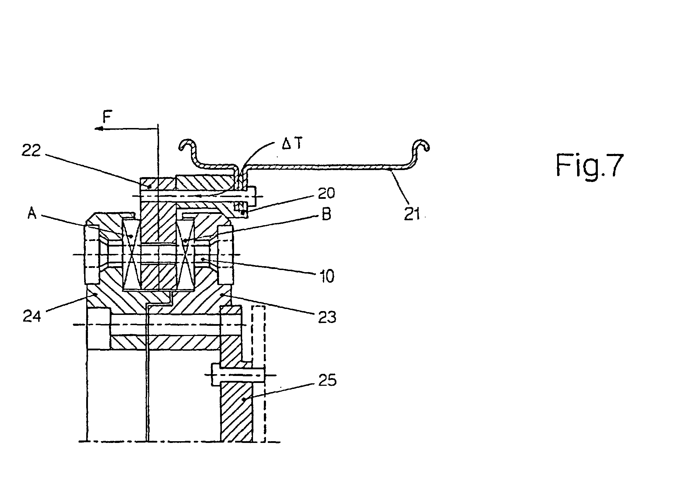

Das Ausführungsbeispiel nach Fig. 7 zeigt eine rotierende Messanordnung, die auf der Radnabe eines Fahrzeuges zur Messung der Radkräfte und -momente montiert ist. Über einen Zwischenring 20 ist eine Felge 21 eines Kraftfahrzeugrades mit einer als Krafteinleitplattform ausgebildeten Scheibenplatte 22 verbunden. Auf dieser Scheibenplatte 22 liegen beidseitig die Messzellen A und B auf, die wiederum mit Hilfe der durchgehenden Vorspannschraube 10 zwischen der Scheibenplatte 22 und zwei Kraftableitplatten 23 und 24 eingespannt sind. Ihre Sensorscheiben sind, wie in den vorhergehenden Beispielen, so orientiert, dass ihre Zug/Druckempfindlichkeit in Richtung der Vorspannschraube 10 verläuft, und dass sich die Mess-Signale durch Temperaturerhöhungen verursachter Kräfte, die durch Dehnungen der Scheibenplatte 22 und der Vorspannschraube 10 in den Messzellen A und B Ladungen hervorrufen, gegenseitig aufheben, während von einseitig gerichteten Kräften erzeugte Ladungen beider Messzellen A und B sich zu dem gewünschten Messsignal addieren. Zur Montage an der nicht gezeigten Radnabe sind die Kraftableitplatten 23 und 24 mit einer ebenfalls scheibenförmigen Halterung 25 verbunden.

### Referenzliste

- 1: Grundplatte
- 2: Deckplatte
- A, B: Mehrkomponenten-Kraftmesszellen
- 3: Vorspannschraube
- 4: Werkstück
- 5: Werkzeug
- 6: Sensorscheiben
- 7: Bohrung
- x, y, z: Signalleitungsanschlüsse der Messzelle für die Signale der x-, y- und z-Komponente der gemessenen Kraft
- ΔT: Temperaturerhöhung
- Δl: Längenänderung
- 8: T-Plattform
- 9: U-förmiger Ständer
- 10: durchgehende Vorspannschraube
- F_{T}: Kraft infolge einer Temperaturerhöhung ΔT
- F: Kraft als Folge einer Werkstückbearbeitung
- ±Q_{Z}: Ladung in z-Richtung (messzellenbezogenes Koordinaten-System), erzeugt durch die Kräfte 1/2 F_{T}, bzw. 1/2 F
- A_{Z}: Zug/druckempfindliche Komponente der Messzelle A (messzellenbezogenes Koordinatensystem)
- B_{Z}: Zug/druckempfindliche Komponente der Messzelle B (messzellenbezogenes Koordinatensystem)
- 11: Montageplatte
- 12: Montageblock
- 13: Neutrale Achse
- 14: Bohrung
- 15: Signalleitung
- 16: Sammelstecker
- 17: Kabel
- 18: Hohlraum
- 19: Hohlraum
- 20: Zwischenring
- 21: Felge
- 22: Scheibenplatte
- 23: Kraftableitplatte
- 24: Kraftableitplatte
- 25: Halterung

## Patentansprüche

1. Kraft- und/oder Momentmessanordnung mit mehreren mit piezoelektrischen Sensorscheiben (6) ausgerüsteten Mehrkomponenten-Kraftmesszellen (A, B) in Verbindung mit einer Plattform (8, 11, 22) für die Kraft- und/oder Momenteinleitung und mit Verstärkern und Auswerteeinheiten, wobei die Kraftmesszellen (A, B) jeweils aus schub- und zug/druckempfindlichen Sensorscheiben (6) bestehen, **dadurch gekennzeichnet, dass** die Kraftmesszellen (A, B), in Richtung der Zug-/Druckempfindlichkeit der Sensorscheiben (6) gesehen, an zwei einander entgegengesetzten Endflächen der Plattform (8, 11, 22) angeordnet sind, dass ferner paarweise aneinander zugeordnete, zug/druckempfindliche Sensorscheiben (6) von einer gemeinsamen, in der Plattform (8, 11, 22) frei dehnbaren Vorspannschraube (19) durchsetzt und vorgespannt sind, und dass schliesslich die einander zugeordneten zug/druckempfindlichen Sensorscheiben (6) an den Enden der Plattform (8, 11, 22) entgegengesetzt und mindestens annähernd gleich stark polarisiert sind.

2. Messanordnung nach Anspruch 1, **dadurch gekennzeichnet, dass** die Plattform (8,11) eine steife Montageplatte für zu bearbeitende Werkstücke (4) ist, bei der die Kraftmesszellen (A, B) senkrecht zur Montagefläche für die Werkstücke (4) angeordnet sind.

3. Messanordnung nach Anspruch 2, **dadurch gekennzeichnet, dass** die Plattform (11) für ein Dynamometer geringster Bauhöhe (H) zwischen den Messzellen (A, B) und zwei äusseren Montageblöcken (12) angeordnet ist, die ihrerseits der Montage der Messanordnung dienen, wobei diese Montage mit Hilfe von nahe den Sensorscheiben (6) angeordneten Aufspannelementen erfolgt.

4. Messanordnung nach Anspruch 2 oder 3, **dadurch gekennzeichnet, dass** die gemeinsame Vorspannschraube (10) in der bezüglich Verbiegung neutralen Achse (13) der Plattform (11) verläuft.

5. Messanordnung nach Anspruch 1, **dadurch gekennzeichnet, dass** die Plattform für die Krafteinleitung als Scheibenplatte (22) ausgebildet ist, die ihrerseits zwischen zwei ebenfalls als Scheiben ausgebildeten Kraftableitplatten (23, 24) unter Zwischenschaltung der zwei jeweils einander zugeordneten Mehrkomponenten-Kraftmesszellen (A, B) angeordnet ist.

6. Messanordnung nach einem der vorhergehenden Ansprüche, **dadurch gekennzeichnet, dass** die Signalleitungen (15) für die Messsignale der Kraftmesszellen (A, B) in einem Sammelkanal zusammengefasst und über einen Sammelstecker (16) nach aussen geleitet sind, von wo sie als Kabelverbindung (17) zu den Verstärkern und den Auswerteeinheiten geführt sind.

7. Messanordnung nach einem der Ansprüche 1 bis 5, **dadurch gekennzeichnet, dass** die Verstärker und die Auswerteeinheiten direkt in der Krafteinleitplattform (8,11) oder in einem der Montageblöcke (12) bzw. in einer der Kraftableitplatten (23,24) untergebracht sind, so dass die Weiterleitung von bereits verstärkten und aufbereiteten Signalen möglich ist.

## Claims

1. A force and/or torque measuring device having several multi-component load cells (A, B) provided with piezoelectric sensor discs (6), in association with a platform (8, 11, 22) for the application of force and/or torque and having amplifiers and evaluation units, wherein the force measuring cells (A, B) each consist of thrust and tension/pressure sensitive sensor discs (6), **characterized in that** load cells (A, B) seen in the direction of the tension/pressure sensitivity of sensor discs (6) are arranged at two terminal areas of the platform (8, 11, 22) which are opposite to each other, that further tension/pressure sensitive sensor discs (6) pair wise assigned to each other are penetrated and prestressed by a common prestressing screw (19) freely expansible in the platform (8, 11, 22), and that finally the tension/pressure sensitive sensor discs (6) assigned to each other at the ends of the platform (8, 11, 22) are polarized in opposite direction and at least approximately with equal intensity.

2. Measuring device according to claim 1, **characterized in that** platform (8, 11) is a rigid mounting plate for workpieces (4) to be processed, wherein the load cells (A, B) are arranged in a perpendicular direction to the mounting surface for the workpieces (4).

3. Measuring device according to claim 2, **characterized in that** platform (11) for a dynamometer having the lowest constructional height (H) is arranged between measuring cells (A, B) and two external mounting blocks (12), which themselves serve for mounting the measuring device, wherein the mounting is done by means of clamping elements arranged in the proximity of sensor discs (6).

4. Measuring device according to claims 2 or 3, **characterized in that** the common prestressing screw (10) extends in the axis (13) of platform (11) which is neutral with respect to deformation.

5. Measuring device according to claim 1, **characterized in that** the platform for force application is formed as a disc plate (22) which itself is arranged between two force diverting plates (23, 24) also formed as discs by an interposed arrangement of the two multi-component load cells (A, B) assigned to each other.

6. Measuring device according to any of the preceding claims, **characterized in that** the signal lines (15) for the measuring signals of the load cells (A; B) are summarized in a collective conduit and directed to the outside via a collective plug (16), from where they are directed to the amplifiers and evaluation units as a cable connection (17).

7. Measuring device according to any of the claims 1 to 5, **characterized in that** the amplifiers and evaluation units are directly placed in the force application platform (8, 11) or in one of the mounting blocks (12) or one of the force diverting plates (23, 24), respectively, such that the transport of signals already amplified and processed is possible.

## Revendications

1. Dispositif de mesure de la force et/ou du moment avec plusieurs cellules de mesure de la force (A, B) à plusieurs composantes, équipés de plaques détectrices piézoélectriques (6), en connexion avec une plate-forme (8, 11, 22) pour la conduite de la force et/ou du moment et avec amplifications et unités d'analyse, où les cellules de mesure de la force (A, B) consistent chaque fois, en des plaques détectrices sensibles à la poussée et la tension/pression (6), **caractérisé en ce que** les cellules de mesure de la force (A, B) sont disposées sur deux surfaces terminales opposées de 1a plate-forme (8, 11, 22), vues en direction de la sensibilité à la tension/pression des plaques détectrices (6), **en ce que** en plus, les plaques détectrices sensibles à la pression/tension (6), disposées par paire sont traversées d'une vis de précontrainte commune, librement extensible dans la plate-forme (8, 11, 22) et précontraintes, et **en ce que** finalement, les plaques détectrices sensibles à la pression/tension (6) sont disposées de manière opposée, sur les extrémités de la plate-forme (8, 11, 22) et au moins approximativement similairement fortement polarisées.

2. Dispositif de mesure suivant la revendication 1, **caractérisé en ce que** la plate-forme (8, 11) est une plaque de montage rigide pour pièce à usiner (4), où les cellules de mesure de la force (A, B) sont disposées perpendiculairement à la surface de montage de la pièce.

3. Dispositif de mesure suivant la revendication 2, **caractérisé en ce que** la plate-forme pour un dynamomètre d'encombrement en hauteur minimal (H) est disposée entre les cellules de mesure de la force (A, B) et deux blocs de montage externes (12), qui servent pour leur part, au montage du dispositif de mesure, où ce montage est réalisé à l'aide d'éléments de fixation disposés à proximité des plaques détectrices (6).

4. Dispositif de mesure suivant la revendication 2 ou 3, **caractérisé en ce que** la vis de précontrainte commune (10) se développe dans la déformation correspondante de l'axe neutre (13) de la plate-forme (11).

5. Dispositif de mesure suivant la revendication 1, **caractérisé en ce que** la plate-forme est formée pour la conduite de la force, comme une plaque (22), qui est disposée entre deux plaques de dérivation de force (23, 24) formées également comme des disques avec intercalation des deux cellules de mesure de la force à plusieurs composantes (A, B) conjuguées.

6. Dispositif de mesure suivant l'une quelconque des revendications précédentes, **caractérisé en ce que** les conduites du signal (15) pour les signaux de mesure des cellules de mesure de force (A, B) sont rassemblées dans un canal de collecte et dirigées vers l'extérieur par un connecteur de collecte (16), d'où elles sont envoyées comme une connexion de câble (17), vers les amplifications et les unités d'analyse.

7. Dispositif de mesure suivant l'une quelconque des revendications 1 à 5, **caractérisé en ce que** l'amplification et les unités d'analyse sont disposées directement dans la plate-forme de conduite de force (8, 11) ou dans l'un des blocs de montage (12) et respectivement, dans une des plaques de dérivation de force (23, 24), de sorte que la transmission des signaux déjà amplifiés et traités est possible.
